(19) **Europäisches Patentamt**

**European Patent Office**

**Office européen des brevets**

(11) **EP 4 575 424 A1**

(12) **EUROPEAN PATENT APPLICATION**

(43) Date of publication:
**25.06.2025 Bulletin 2025/26**

(21) Application number: **23220067.5**

(22) Date of filing: **22.12.2023**

(51) International Patent Classification (IPC):
**G01G 23/10** (2006.01)

(52) Cooperative Patent Classification (CPC):
**G01G 23/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mettler-Toledo GmbH**
**8606 Greifensee (CH)**

(72) Inventors:
- **DMITRIEV, Vitaly**
  **8606 Greifensee (CH)**
- **TRAUTWEILER, Christoph**
  **8606 Greifensee (CH)**

(74) Representative: **Leinweber & Zimmermann**
**Patentanwalts-PartG mbB**
**European Patent Attorneys**
**Viktualienmarkt 8**
**80331 München (DE)**

(54) **METHOD OF WEIGHING AN ITEM**

(57) Method of weighing an item, wherein weighing data comprising a plurality of single weight measurement signals measured for the item at different measurement times are provided via the weighing process which might be subject to disturbance from environmental and/or weighing internal conditions, and wherein the weighing data are analyzed by performing a signal analysis to detect the presence of a disturbance, wherein the weighing data are analyzed by performing a further second signal analysis different from said signal analysis, said signal analysis being a first signal analysis representative of a first type of disturbance, the second signal analysis being to detect a second type of disturbance different from the first type of disturbance, thereby allowing identification of not only presence but also type of disturbance within a classification comprising at least two different types of disturbance.

Fig. 2

**Description**

The invention is related to a method of weighing an item, wherein weighing data comprising a plurality of single weight measurement signals measured for the item at different measurement times are provided via the weighing process which might be subject to disturbance from environmental and/or weighing internal conditions, and wherein the weighing data are analyzed by performing a signal analysis to detect the presence of a disturbance.

Such weighing methods are well known. For instance, EP 3 926 309 A1 discloses a signal analysis of weight values performed by artificial neuronal network to provide estimated values in less time as when one would wait for issuance of the final weight signal, such that even under disturbances reliable estimated values are available for combination weighing. The analysis comprises Fourier analysis and the filtering of disturbance-frequencies.

EP 0 622 617 A1 discloses a weighing machine being a combinational weighing machine having scale cells and a plurality of dummy cells and comprising filters to remove high-frequency vibration components and floor vibration correcting means to calculate a weight value of an object via a modification of the weight component modified by a vibration component.

It is the object of the invention to improve a weighing process as originally introduced, aiming in a beneficial combination of reasonable level of reliability of the weighing results and beneficial conditions of adjustability for stable measurement results.

This object is, in terms of a method, solved by a further development of a method according to the initially introduced kind, which is essentially characterized in that the weighing data are analyzed by performing a further second signal analysis different from said signal analysis, said signal analysis being a first signal analysis representative of a first type of disturbance, the second signal analysis being to detect a second type of disturbance different from the first type of disturbance, thereby allowing identification of not only presence but also type of disturbance within a classification comprising at least two different types of disturbance.

By classification, one enables weighing processes in dependency of better knowledge regarding the origin of a disturbance which might negatively affect the weighing result. For instance, even if there is a frequency disturbance from environment, which might even not be large enough to dismiss the weighing result as faulty, the known presence of another disturbance such as f.i. an air turbulence, which might remain undetected by the first signal analysis, can be taken into account and might result in the weighing result being considered invalid.

Moreover, a user is enabled to set up operable working conditions in an easier and more rapid way, since the user is not required to seek for the origin of f.i. repeatedly signalled disturbances, such as f.i. performing extensive search for identifying possible vibration or shock disturbances when the true reason for non-reliable weight results come from f.i. turbulent air flow. This holds, also, for a situation when the results of the first signal analysis indicate reliable and admissible weight values but one is always close at the border of allowability while the classification according to the claimed invention would enable better exploitation of the weighing accuracy in consideration of such additionally detected disturbance as f.i. turbulent air flow. The same may apply for signal control via first analysis to control vibrations resulting from weight change, while the classification according to the invention may indicate disturbance on a lower level caused by electrostatic influence of the weighing cell.

The inventive method can be applied to all kind of weighing cells and weighing systems. The advantages are in particular beneficial for high precision weight measurement with weighing cells having an accuracy of at least 10 mg, further preferred at least 1 mg, in particular at least 0.1 mg. Moreover, there is high benefit for laboratory scales, in particular those without windshield. However, the invention may also be beneficial for other weighing such as weighing during transport (check weigher), or combination weighing including a group of balances, in particular a larger group of balances. In a preferred embodiment, the process applies to a single balance system.

In a preferred way of performing the method, it is additionally provided that a measurement value indicative for the weigh of the item is derived from the weighing data and an instability indicator is determined and in particular displayed to a user, indicating whether one or more of the detected disturbance indicates a reliability of the derived weight measurement value being lower than a pre-set reliability.

In this way, it can be easily established whether weighing results might be in the need to be rejected. The indicator could be displayed or otherwise indicated to a user, f.i. via a symbol displayed in screen, an alarm or else. When the indicator is triggered, also start of an automated procedure leading to a repetition of measurement or sorting out of faulty measured item can be provided.

In a preferred way of performing the method, it is additionally provided that a type indicator is determined and in particular displayed to a user, indicating the type of disturbance of one or more of the detected disturbances.

Said further indicator can comprise a subset of sub-indicator selectable in dependency of the result of the first and/or second signal analysis. For instance, such indicator, respectively one or more sub-indicators may be displayed on a display of a balance, a monitor of a separate surveillance station for the balance, including graphical user interfaces, exemplarily in a pre-defined window on the screen. This window could also appear in the foreground at the moment that there is triggering of said further indicator.

A user is enabled to check for the physical origin of the identified disturbance by said classification and indicator without time delay. Even if the weighing results are still considered sufficiently stable, a user/weighing device operator is informed of f.i. laboratory environment influences or that his weighing setting practice can give suboptimal performance. By said second signal analysis, one can also achieve information that there is a quantifiable deviation of (ideal) working conditions in particular additionally to vibrations for shocks, since on a lower level of disturbance magnitude. In this way, the weighing process may signalize also a classification hint in terms of two or more sub-indicators out of a group of sub-indicators with a maximum number larger than the number of indicated sub-indicators. That is, the function of the further indicator can also be that of excluding a specific type of disturbance. In this regard, each of said different type of disturbances may include subclasses of disturbance origins, said types still being different from each other f.i. regarding the level of magnitude of disturbance or periodic nature of disturbance versus aperiodic nature of disturbance, such as vibration versus air flow turbulence.

In a preferred way of performing the method, it is additionally provided that the second signal analysis comprises a transformation of the weighing data, in particular after pre-data treatment, into a two-dimensional representation comprising both information in time domain and its complementary domain. This provides benefit for detection of aperiodic disturbance, such as turbulent air flow. The remaining information regarding time domain in the two-dimensional representation enriches the signal evaluation possibilities beyond having frequency-only based representations.

In a preferred embodiment, wavelet analysis is performed for the second signal analysis. The mother wavelet may belong to some predefined set of wavelet functions, such as Morlet, DOG or other, and could also be user-defined or learned from other processes to match known existing disturbance profiles. Regarding predefined set of functions, most preferred is the DOG mother wavelet. Pre-data treatment may include to make the original weighing data, that is a number of single measurement values $w_i$ mean-free and normalized by standard deviation. The signal analysis may start upon automatic triggering or user-triggered, f.i. once a buffer provided for the weight values is full.

The results of the wavelet analysis can be grouped in vectors O, where j indexes the complementary domain, said vector containing all values of $c_{j,k}$ of the two-dimensional representation, the index k being indicative for the time domain. As it is easily understood, the relevant set of indexes can be smaller than the overall set used for wavelet analysis due to boundary effects.

This second signal analysis for weighing results is considered of advantage even it would be the only signal analysis provided in a weighing process control.

Accordingly, the invention provides additionally and independently protection-worthy also a method of weighing an item, wherein weighing data comprising a plurality of single weight measurement signals measured for the item at different measurement times are provided via the weighing process which might be subject to disturbance from environmental and/or weighing internal conditions, and wherein the weighing data are analyzed by performing a signal analysis to detect the presence of a disturbance, said signal analysis comprising a transformation of the weighing data, in particular after pre-data treatment, into a two-dimensional representation comprising both information in time domain and its complementary domain, and said signal analysis being in particular for detecting a type of disturbance related to air turbulence or electrostatic error and/or used for a check of presence of deviations from reference (baseline) values to provide for an in particular quantifiable deviation of working conditions.

In a preferred way of performing the method, it is additionally provided that the second signal analysis comprises establishing a set of signal statistic values derived from said two-dimensional representation.

As described also below, the signal statistics may comprise maximum statistics, higher order statistics and/or correlation statistics. In particular, regarding higher order statistics, determination of Kurtosis is preferred. Higher order statistics may also be limited to only determination of Kurtosis. In one preferred and simple way, only maximum statistics might be considered. In another preferred embodiment, only maximum statistics and higher order statistics are considered. On the other hand, even more complicated statistics may be taken into account and/or a combination of different statistic evaluations.

In a preferred way of performing the method, it is, therefore, additionally provided that the establishing comprises determination of a maximum over values in the time domain attributed to a respective index in the complementary domain for a group of, preferably the majority of, in particular all the indices in the complementary domain.

Here, said maximum statistics might be implemented in a simple manner by just using all available values of the relevant set of indexes (after consideration of boundary effects), both in time and complementary (frequency) domain. However, also only a selected number of indices can be considered, such selection simplifying the evaluation in terms of calculation effort. Such selection may omit values either by rougher scaling, otherwise via specific omissions due to known reference values of signal portions less important for evaluation.

In a preferred way of performing the method, it is additionally provided that the establishing further comprising for a group of, preferably the majority of, in particular all the indices in the complementary domain the forming of statistical moments and in particular their ratio of respectively equal order, and/or correlation statistics involving such statistical moments for at least two indices in the complementary domain being in particular neighbored to each other.

The same as said above regarding maximum statistics applies, mutatis mutandis, for other statistics as higher order statistics or correlations statistics.

In a preferred way of performing the method, it is additionally provided that the detection of the second type of disturbance involves comparing the set of signal statistic values, in particular having substracted a set of base line values, with a set of predetermined threshold values.

The base line values can be formed by characteristic weight signal stored at a previous time interval, they can also be preset, f.i. triple of standard deviation for maxima, three for Kurtosis and zero for correlation. Again, comparison with threshold values can be done for a group, the majority or all index values in the complementary domain.

The predetermined threshold values can be used within a decision tree, leading to a characterisation of the type of disturbance. For instance, turbulence can be detected when one, two or all comparisons for maximum statistics, higher order statistics and correlation statistics are above the threshold. The threshold values may be set via calibration under condition of known preset turbulence of environmental influence. One may have a plurality of thresholds attributed to calibration information from experimental calibration for different known applied disturbances, theoretical simulations and/or data sets reflecting experience values.

In one embodiment of a decision tree, the check for turbulence is subsequent to a check for mechanical disturbance and/or a check for vibration. In one embodiment, one may perform the above-described check for turbulence independently from a check of f.i. vibrations, such as to capture possible disturbance resulting from both turbulence and low-amplitude vibrations.

In a possible way of performing the method, it is additionally provided that a quantification information of disturbance of second type is done by having two sets of thresholds and hysteresic thresholding with attributed scaling coefficient and time length.

In a preferred way of performing the method, it is additionally provided that the method comprises a correlation evaluation of the results of second detection with the instability indicator.

Such correlation evaluation of second analysis and instability indicator allows determination of still valid measurement results although there is indication of (mild) disturbance, when the quantified disturbance is not significant enough to render the measurement values invalid. Nonetheless, useful information is given to the user for optimizing the weighing system settings and/or weighing process. This can be done by identifying sources of disturbance and their reduction/elimination, or by modifying settings of the balance as thresholds of the algorithms, draft, etc.

In a preferred way of performing the method, it is additionally provided that the classification comprises at least one of shock, weight-change and vibration, and at least one of air turbulence and electrostatic error.

Shock, weight-change and vibration are typical examples of disturbance on a rather high level, which, once identified, could also be countered in terms of modification of the weight signal by superposition of a compensation signal as known in the art. Air turbulence and electrostatic error are rather considered on a lower level of magnitude and aperiodic, and can notwithstanding lower influence be considered detrimental, respectively a user may adapt the weighing settings/weighing environmental conditions.

In a preferred way of performing the method, it is additionally provided that the method involves pre-definition or change of parameters of the second signal analysis and/or detection algorithm of second detection by user input, from learned data and/or from history data from the actually used weighing means and/or from similar earlier measurements of other weighing units.

On the one hand side, automatic algorithms may react on identified disturbances to counter-compensate them, on the other hand, also the user might directly influence in reaction of identified and classified disturbances.

In a preferred way of performing the method, it is additionally provided that the method involves setting a set of in particular figurative icons attributed to a set of types of disturbance, in particular sub-types of disturbance, in particular determined involving a decision tree, and displaying the icon on a graphical user interface in dependency of the outcome of the detection via the first and/or second signal analysis. This enhances user-friendly handability of the weighing system when disturbances are identified and classified.

The invention provides also a computer program product to perform said method, and in terms of device a weighing means capable to and being controlled to perform a mode of operation, such a method. The (digital) signal processing may be carried out on an embedded platform running on a microchip of weighing control, in particular at the weighing unit.

Thus, by passing selected key statistics as described above and determined from analysis of selected second and in particular also first analysis, such as wavelet and Fourier analysis (with f.i. Spectrum, Cepstrum and wavelet scales through a decision tree) a classification of the weighing signal (data) is obtained.

Further features, details and advantages of the invention can be derived from the subsequent figurative description referencing the accompanying figures, wherein

Fig. 1 shows, in a schematical manner, a balance in the presence of environmental disturbance,

Fig. 2 shows in a schematical manner a graphical user interface,

Fig. 3 shows a decision tree,

Fig. 4 shows wavelet statistics of balance raw signal data during upsurge of turbulence

Fig. 5a shows the raw signal data underlying a time interval of Fig. 4, and

Fig. 5b shows the raw signal data underlying another time interval of Fig. 4.

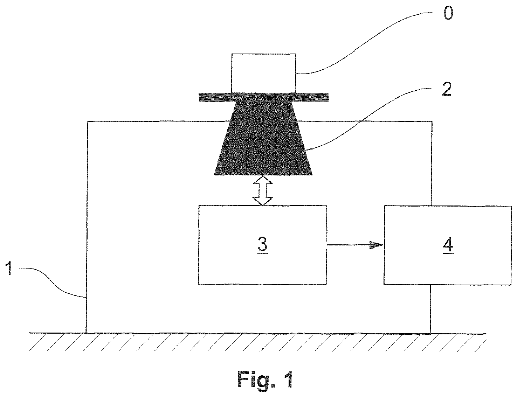

In Fig. 1, a balance 1 is shown in a schematical manner. The balance 1 has a load platform 2 and a sensor (load cell) 3 detecting the load of mass m of an item 0 when the item 0 is placed on platform 2. A control (not shown in Fig. 1) is provided with software function to calculate, from weight signals received from sensor 3, a weight measurement value as result of the weighing process for item 0. Said result can be displayed on a display, respectively user interface 4 of the balance 1.

As is further indicated in Fig. 1, there might be environmental disturbance during weighing, which may arise from shock or vibrations, load change, but also lower order disturbance as air turbulence or even electrostatic disturbance.

In a possible embodiment, the balance can be a laboratory scale, and may have a weighing accuracy of at least 1 mg, while it may also be a scale without additional windshield used to minimize influence by air of the environment.

During an exemplary weighing process, the control may collect/sample discretized weight signal w at regular time intervals (of course, the invention is not limited to have equidistant weight signal values in time). As usually, weight values might be pre-processed and stored in a buffer of the control. All this can be done as usually in the prior art, and also the calculation of a weight value to be given out at the display or any other receiving unit for the final weighing result can be done according to the usual evaluation techniques to arrive at the weighing result of the weighing process.

In a possible embodiment of the invention, further signal evaluation is done to determine whether there can be, additionally to possible disturbances in terms of vibration or shock, a disturbance of f.i. turbulent air flow. To this end, in a pre-processing step, the signal in form of weight values $w_i$, i=1,...M is made mean-free and normalized by standard deviation. Pre-processing may include additional steps as applying filter, decimation and/or creating a function of the values, as f.i. the square root $\sqrt{w}$. For instance, decimation can be done such that the analyzed signal has M so that all the values can be accommodated in the provided memory, f.i. 500 or more.

At a specifically determined time, which can be automatic or triggered by the user and, f.i. when the buffer is full, further analysis for classification of disturbance and in particular identification of possible air flow turbulence can be performed. To this end, the normalized and mean-free signal can be decomposed into a set of basis functions or frames, arriving a two-dimensional representation of the signal containing both information in the time domain and its complementary (frequency) domain. Such representation could be a Window-Fourier representation or, preferably, obtained by wavelet analysis.

Thereby, by applying discrete analysis, one obtains coefficients $c_{j,k}$, which can be mathematically expressed in form of a scalar product $<W,\psi_{j,k}>$, with time component k=1...M and complementary component (indexing frequency information) j=1..., J. J may be larger than 16 and lower than 128. For example J can be 64.

As mother wavelet $\psi$ can be used a suitably defined wavelet, preferred embodiments could include the Morlet wavelet or the DOG-wavelet, in particular DOG-wavelet is preferred. However, also a user-defined wavelet can be used in dependency of learned existing disturbance profiles, to match them suitably. For the scalar product $<e_i,\psi_{j,k}>=\psi(2^j i-k)$, $e_i$ being a basis vector having 1 (one) at position i and zero otherwise. Regarding the coefficients $c_{j,k}$, the relevant set of indexes may be smaller due to boundary effects. $\Omega_j$ is defined as a set comprising coefficients $c_{j,k}$ for k element of $\Omega_j$ and may form for the respective relevant index j a coefficient vector $C^j$.

Next, in one possible embodiment, further statistic evaluations are performed. In one embodiment, maximum statistics is performed, calculating $s^j_{max}=\max c_{j,k}$ over $k \in \Omega_j$, that is for each frequency scale one calculates the maximum determined over the time index. However, it is, of course, possible to calculate maximum statistics not for all frequency scales j, but for a predefined set thereof, which may, however, preferably include the majority of the frequency scales.

Further, for again a pre-defined set of frequency scales, which can be the majority or even for all frequency scales, at least one higher order statistical moment $s^j_m= \mu^j_m/\sigma^j_m$ can be calculated where $\mu^j_m$ is the estimate value $E[(C^j)^m)]$, while $\sigma^j_m$ is {square root $(E[(C^j - \mu^j)^2])$}$^m$.

In a preferred embodiment, m is set to 4, and one determines for predefined set of frequency scales j, in particular for the majority thereof, even for all frequency scales j, as $s^j_4$ is adapted to signal heavier tails in the respective distribution coming from turbulent flow by its intermittent nature. On the other hand, the metric $s^j_{max}$ can signal large outlines, another property of turbulent flow.

In a further aspect which may be introduced additionally, even energy transfer between scales considered as a sign of turbulent flows may be considered by correlation $s^j_{corr}$ being defined as $s^j_{corr} = ( E [ (C^j - \mu^j_1) (C^{j+1} - \mu^{j+1}) ] / \sigma^j_2 \sigma^{j+1}_2 )$.

By one ore more of these evaluations, pattern recognition is effected on the basis of a two-dimensional representation to achieve spectral information resolved in also the time domain.

In one embodiment, only maximum statistics $s^j_{max}$ is performed, in another embodiment, additional higher order statistics is included, preferably by including at least Kurtosis. For another, even more refined embodiment, said correlation statistics $s^j_{corr}$ can be added.

As a further step, for one, more or all of the preferably described statistic values, base line values can be calculated, either from characteristic weight signal stored at a previous time point, representing f.i. normal device operation for the weighing device. Otherwise, for base line values one can also use pre-set values, f.i. the triple of standard deviation for maxima, three for and zero for correlation. Subsequently, base line values are indicated by $\check{S}^j_{max}$, $\check{S}^j_m$, $\check{S}^j_{corr}$.

In the amount selected for analysis (only maximum statistics, additional higher order statistics, in particular Kurtosis, and/or correlation statistics), differences $\Delta s^j$ are performed for each of desired $s^j_{max}$, $s^j_{corr}$, $s^j_m$, by substracting the baseline values $\check{S}^j_{max}$, $\check{S}^j_m$, $\check{S}^j_{corr}$ and these differences $\Delta s^j$ are compared with respective threshold values ($d^j_{max}$, respectively $d^j_m$, $d^j corr$).

In a simple approach, only maximum statistics is performed and a decision tree is set up, which may include the decision that turbulence is deemed to be detected when $\Delta s^j$ is above threshold $d^j_{max}$ for a selected subset of frequency scales j, in particular the majority, in particular all frequency indices j.

In the same way, for additional consideration of higher order statistics or even correlation statistics, the decision tree can include checks for $\Delta s_{corr}$ above $d_{corr}$ (leading frequency scale index j apart), respectively $\Delta s$ being above $d_m$.

Even if the threshold values are selected such that being below threshold should no more influence stability of the weighing result, one can still use two sets of threshold values and a coefficient for hysteresic thresholding r and time length $\tau$, to perform hysteresis thresholding by means of f.i. Canny algorithm or similar.

Even more complicated criteria could be involved, including linear or non-linear combination of statistics. Moreover, coefficients of a linear combination and thresholds can be learned from previously observed signal values.

That is, by comparison of the signal to base line it is, when the base line is present, even possible not only to signal presence of turbulence, but also to give information at the signal characteristics which have drifted away from the ones in the base line. This information can be used for an indication of the time development of measuring conditions, whether they get better or worse since the last measurement. Accordingly, the invention also provides a monitoring of the functional state of weighing means on the basis of the second signal analysis repeatedly performed for a plurality of weighing processes.

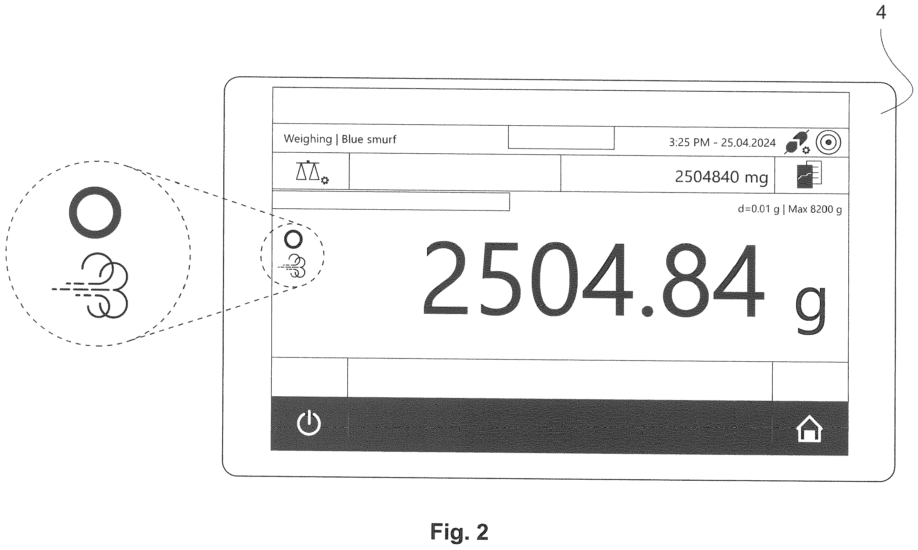

As can be seen in Fig. 2, a graphical user interface may have an area in the display, in Fig. 2 on the left side next to the indication of a weighing result. This area comprises first and second subareas. In the first subarea, here located above the second subarea, an icon, here a circle, for indicating instable weight results. In the second subarea, a further icon or more icons may be indicated, representative for the possible cause of disturbance. In the present embodiment of Fig. 2, what is shown is that the result of the weighing is instable due to a draft disturbance. As such, the item might be appropriately selected to represent either origin or type of disturbance or both.

In presence of such indication, the user is alarmed of the presence of air turbulence through the graphical user interface (GUI) through set indicators on the screen. The turbulence detection indicator can be presented together with the balance instability indicator. Since disturbance detection indicator is, in this example, paired to the logic of the stability indicator, one can avoid showing presence of mild turbulent distance when the device is still delivering stable measurement and thereby also avoid a constant flickering of turbulence detection.

Those signal analysis detection and their results can be enriched for further sensitivity and specificity of the classification by use of other sensors such as a flow sensor (e.g. an anemometer or a tube) and/or a temperature sensor.

Not shown in Fig. 2 are input options, f.i. via touchscreen of the GUI, for the user to give the balance, about recording signals f.i. at calm environment or by environment affected by disturbance, such that within the algorithms, elements of pattern recognition, such as base line and thresholds and the spectral transform basis can be learned from the environment. Via other input options, it is possible that an operator or a user or a developer can change some basic algorithmic parameter, such as thresholds for detection.

Signal analysis regarding first signal analysis in particular meant to identify vibration or signal disturbances as weight-change or short time-shocks can use, f.i. Fourier analysis and its further evaluations such as cepstrum or other quantities derivable from the Fourier harmonics via linear or non-linear transforms. These are, as such, well known and not reported in more detail here. Thereby, a filtering operation can be included to cut irregular frequencies respectively to get rid of noise. On the other hand, also here wavelet decomposition can be used, f.i. to detect loss of continuity in higher harmonics. Accordingly, for shock detection one or more of the following parameters may be used from wavelet analysis: $\Pi^M_{j=1} c_{j,k}$, $\Sigma^M_{j=1} jc_{j,k}$ and $max_k W_k - min_k W_k$.

From these, the first two metrics can even be updated online. Further ways of detecting turbulence might include Kalman filter and MUSIC-algorithms. While these might be harder to threshold, this still may allow an indication of disturbance frequency, and, in case of Kalman filter, even other parameters of the disturbance.

Thereby, one can achieve a classification of the original weight signal due to categories such as A calm, B mechanical disturbance (shock, weight-change), C (vibration), and D (turbulence).

By signal evaluation as described above, not only the presence of a disturbance can be signalled, but also a classification as additional information. Moreover, other parameters can be additionally delivered to the user, as amplitude of the disturbance, and if applicable, phase and modulation.

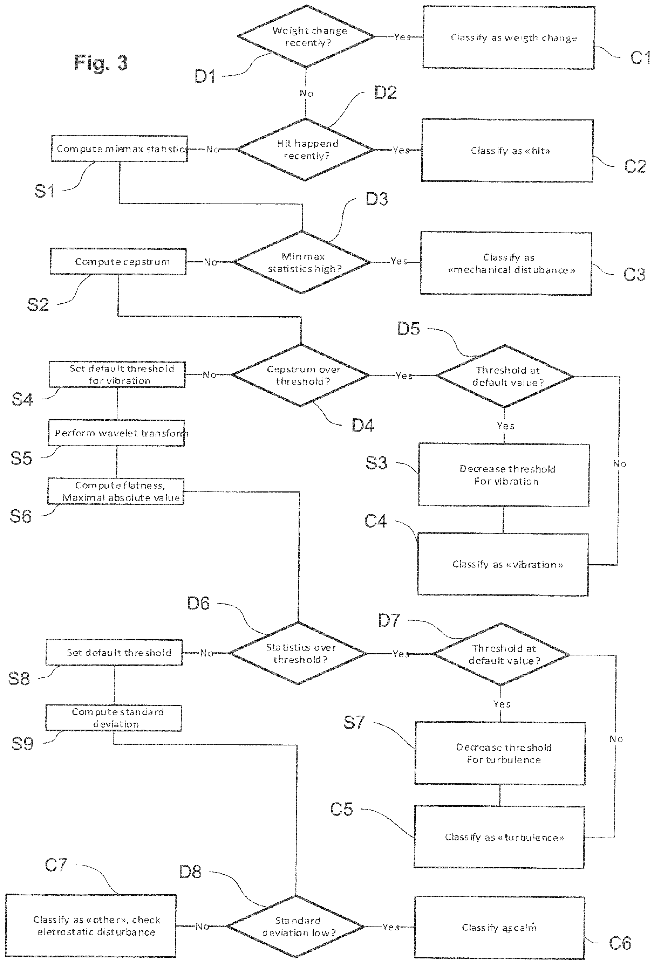

An example of a decision tree which can be used to classify different types of disturbances including turbulence such as air turbulence is shown in Fig. 3. In Fig. 3, decision steps are denoted as D1, D2, ..., classification steps are denoted as C1, C2, ... and steps such as computing steps or other steps of action are denoted by S1, S2, ...

One decision step is D1 checking whether there was recently a weight change. Whether at a given time there has recently been a weight change can be, for instance, checked by information from an overall control means controlling the weighing process. When there has been a recent weight change, the resulting signal fluctuations can easily be attributed and classified as weight change (step C1).

In a similar manner, one may already be able to decide whether there was a recent mechanical disturbance (step D2), for instance by an optional additional sensor such as f.i. an acceleration sensor. If the presence of such a mechanical disturbance can be checked already on external level without looking at the weight signal, one can already classify a mechanical disturbance (step C2).

In step S1, a minimum-maximum statistics is computed based on the weight signal data which can, for instance, be just the single weight sampling data, and in step D3, said min-max statistics can be compared with a predetermined threshold but, if it is too high, one may classify as mechanical disturbance (step C3), in accordance with category B above.

The cepstrum obtained from the weight data can be computed by any suitable way, for instance also by Fourier harmonics (step S2), and a classification as vibration (step C4), as category C above, can occur when in decision step D4 it is found that the cepstrum is above a respective predefined threshold. Said threshold might be decreased (step S3) in dependency of whether the threshold is at a default value (step D5), and one may set a default threshold for vibration in step S4.

As described so far, the decision tree gives the possibility for classification on a level of disturbance of mechanical disturbance as a shock and vibration, but is not only capable to indicate the disturbance as such, but also to indicate the origin of the disturbance on this level.

Moreover, the decision tree has a further decision step D6 to decide whether turbulence such as air turbulence can be the origin of disturbance and to classify the disturbance as turbulence (step C5), as category D above. To this end, wavelet transform is performed (step S5) based on the weighing data obtained from the weighing device, to obtain a transformation of the weighing data in a two-dimensional representation (time and frequency).

From the wavelet transform obtained in step S5, statistics is derived in step S6, such as those described in detail above, giving information about maximum statistics, higher order statistics or even correlation statistics, for instance maximum absolute value can be computed and flatness can be computed.

In decision step D6, these statistics are compared to given thresholds, as also explained in detail above. The threshold for turbulence can also be decreased (step S7) in dependency of a comparison whether the threshold is at default value (step D7) and default threshold can be set in step S8.

As a further step, standard deviation can be computed (step S9), based on the wavelet transformation data. When it is found in decision step D8 that the standard deviation is low (below a given threshold), the weighing process can be classified as "calm" (step C6), that is without indication of disturbance or positively as disturbance-free, corresponding to category A above.

Otherwise than classification "calm" at this stage, there might still be a problem/disturbance not yet classified by the decision tree, and in step C7, the control may classify as "other" than A, B, C, D - type of disturbance. This can give the user an indication to check for possible electrostatic disturbances.

In any case, the user does not obtain an information only about the presence of a disturbance but, by means of the type-indicator or even sub-indicator derived via the classification steps also an information about the origin of disturbance.

One easily understands that the decision tree of Fig. 3 is only an example and not limiting for the invention. In another example, the wavelet transform (step S5) can be performed at an earlier stage, and for instance the computing steps S1 and S2 could be computing steps on the basis of the wavelet data. Further, other two-dimensional representations can be used, such as windows Fourier, although wavelet transform is preferred.

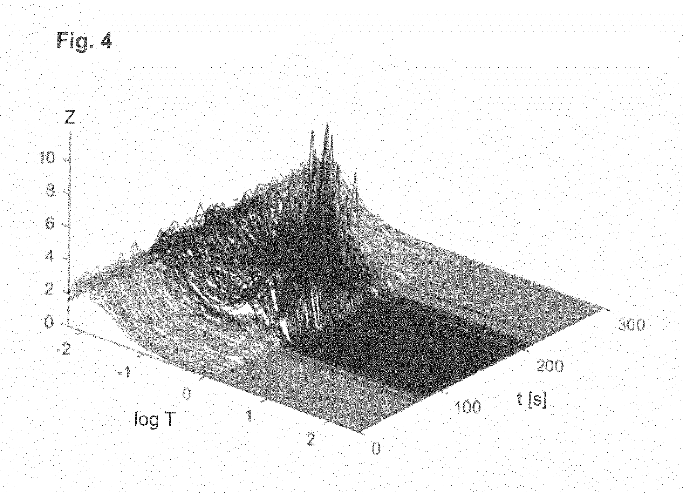

In Fig. 4, exemplary wavelet statistics data is displayed in the two-dimension frequency and time domain, during upsurge of turbulence. Along the Z-axis one sees the maximum of the absolute value of the wavelets. On the other two axes is the time of the signal recorded by the weighing device (balance) in seconds between 0 and 300 seconds, and the logarithm ($\log_{10}$) of the period T of the wavelet related to the wavelet number.

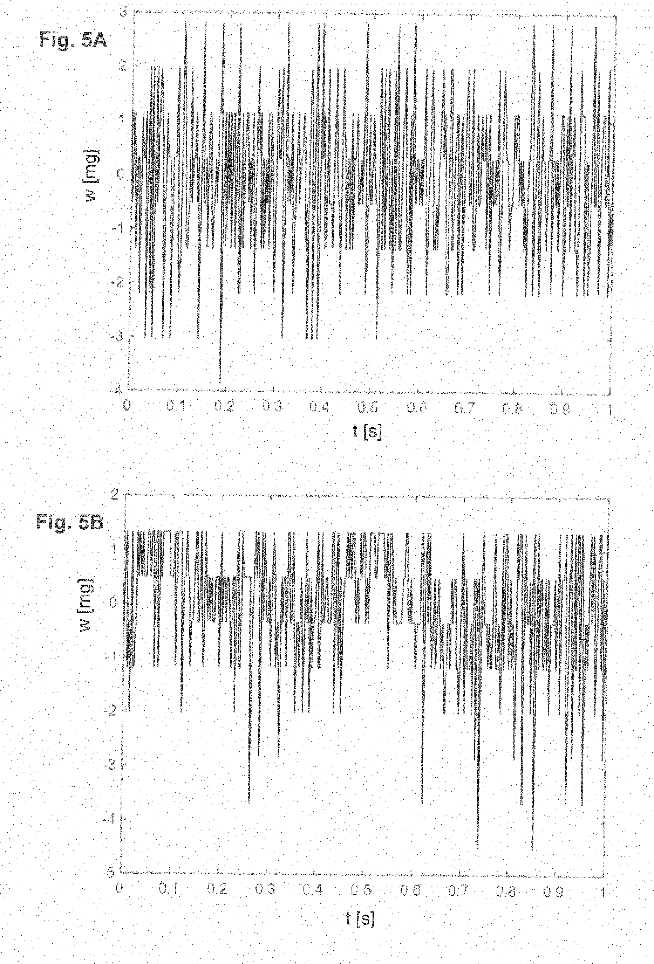

The balance raw signal in the time interval between 10 s and 11 s leading to the wavelet statistics in Fig. 4 is shown in Fig. 5A, while the underlying balance raw signal in the interval from 100 s and 101 s of Fig. 3 is shown in Fig. 5B.

The invention is not limited by the exemplary embodiments of the above description. Rather, the features of the subsequent claims and of the above description, alone or in combination, can be meaningful for the subject invention.

## Claims

1. Method of weighing an item (0), wherein weighing data comprising a plurality of single weight measurement signals measured for the item at different measurement times are provided via the weighing process which might be subject to disturbance from environmental and/or weighing internal conditions, and wherein the weighing data are analyzed by performing a signal analysis to detect the presence of a disturbance,
**characterized in that** the weighing data are analyzed by performing a further second signal analysis different from said signal analysis, said signal analysis being a first signal analysis representative of a first type of disturbance, the second signal analysis being to detect a second type of disturbance different from the first type of disturbance, thereby allowing identification of not only presence but also type of disturbance within a classification comprising at least two different types of disturbance.

2. Method according to claim 1, wherein a measurement value indicative for the weight of the item is derived from the weighing data, and an instability indicator is determined and in particular displayed to a user, indicating whether one or more of the detected disturbance indicates a reliability of the derived weight measurement value being lower than a pre-set reliability.

3. Method according to claim 1 or 2, wherein a type indicator is determined and in particular displayed to a user, indicating the type of disturbance of one or more of the detected disturbances.

4. Method according to any of the preceding claims, wherein the second signal analysis comprises a transformation of the weighing data, in particular after pre-data treatment, into a two-dimensional representation comprising both information in time domain and its complementary domain.

5. Method according to claim 4, wherein the second signal analysis comprises establishing a set of signal statistic values derived from said two-dimensional representation.

6. Method according to claim 4 or 5, wherein the establishing comprises determination of a maximum over values in the time domain attributed to a respective index in the complementary domain for a group of, preferably the majority of, in particular all the indices in the complementary domain.

7. Method according to claim 5 or 6, the establishing further comprising for a group of, preferably the majority of, in particular all the indices in the complementary domain the forming of statistical moments and in particular their ratio of respectively equal order, and/or correlation statistics involving such statistical moments for at least two indices in the complementary domain being in particular neighbored to each other.

8. Method according to any of the preceding claims, wherein the detection of the second type of disturbance involves comparing the set of signal statistic values, in particular having substracted a set of base line values, with a set of predetermined threshold values.

9. Method according to any of claims 2 to 8, comprising a correlation evaluation of the result of the results of second detection with the instability indicator.

10. Method according to any of the preceding claims, wherein the classification comprises at least one of shock, weight-change and vibration, and at least one of air turbulence and electrostatic error.

11. Method according to any of the preceding claims, involving pre-definition or change of parameters of the second signal analysis and/or detection algorithm of second detection by user input, from learned data and/or from history data from the actually used weighing means (1) and/or from similar earlier measurements of other weighing units.

12. Method according to any of the preceding claims, involving setting a set of in particular figurative icons attributed to a set of types of disturbance, in particular sub-types of disturbance, in particular determined involving a decision tree, and displaying the icon on a graphical user interface in dependency of the outcome of the detection via the first and/or second signal analysis.

13. Method of performing the second signal analysis of claim 1 with the features of claim 4 within a process of weighing an item (0) on a weighing unit (1) for detecting a type of disturbance related to air turbulence or electrostatic error.

14. Computer program product, providing, when executed on a control of a weighing means, the performance of a method according to any of the claims 1 to 13.

15. Weighing means (1) for weighing one or more items (0), having at least one weighing cell (3) for providing a plurality of single weight measurement signals each being taken at a different time, and having a control being, in a mode of operation, controlled to perform a method according to any of claims 1 to 13.

Fig. 1

EP 4 575 424 A1

Fig. 2

**Fig. 3**

Fig. 4

Fig. 5A

Fig. 5B

14

Europäisches
Patentamt

European
Patent Office

Office européen
des brevets

# EUROPEAN SEARCH REPORT

**Application Number**

EP 23 22 0067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 907 128 B2 (ISHIDA SEISAKUSHO [JP]) 14 June 2005 (2005-06-14) | 1,4-15 | INV. G01G23/10 |
| A | * column 1, line 8 - column 2, line 67 * * column 4, line 19 - column 5, line 5 * * column 6, line 32 - column 8, line 58 * * figures 1-7 * | 2,3 | |

- - - - -

TECHNICAL FIELDS
SEARCHED      (IPC)

G01G

The present search report has been drawn up for all claims

| Place of search | Date of completion of the search | Examiner |
|---|---|---|
| The Hague | 29 May 2024 | Koch, Florian |

EPO FORM 1503 03.82 (P04C01)

## ANNEX TO THE EUROPEAN SEARCH REPORT
## ON EUROPEAN PATENT APPLICATION NO.

EP 23 22 0067

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | | Publication date | Patent family member(s) | | Publication date |
|---|---|---|---|---|---|
| US 6907128 | B2 | 14-06-2005 | EP | 1363112 A1 | 19-11-2003 |
| | | | JP | 3771195 B2 | 26-04-2006 |
| | | | JP | 2003337062 A | 28-11-2003 |
| | | | US | 2003215100 A1 | 20-11-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3926309 A1
- EP 0622617 A1